# EUROPEAN PATENT APPLICATION

(11) **EP 4 738 549 A1**
(43) Date of publication of application: **06.05.2026**
(21) Application number: 25213536.3
(22) Date of filing: 05.11.2025
(51) Int. Cl.: H01M 50/105, H01M 50/119, H01M 50/133, H01M 50/169, H01M 50/102, H01M 50/148, H01M 50/159, H01M 50/547, H01M 50/55

(54) **SECONDARY BATTERY AND CASE FOR SECONDARY BATTERY**

(30) Priority: 05.11.2024 KR 20240155094
(71) Applicant: SAMSUNG SDI CO., LTD., Yongin-si, Gyeonggi-do 17084 (KR)
(72) Inventor: Lee, Jeawoan, Yongin-si, Gyeonggi-do 17084 (KR)
(74) Representative: Meissner Bolte Partnerschaft mbB

(57) **Abstract**

A secondary battery includes: an electrode assembly (110); a lower case (120) including a receiving part (127) having a receiving space for accommodating the electrode assembly (110), and a flange part (128) surrounding around an open side surface of the receiving part (127); and an upper cover (130) coupled to the flange part (128) of the lower case (120), and sealing the open side surface of the receiving part (127). The receiving part (127) of the lower case (120) includes a bottom surface (140) spaced from the flange part (128), and a sidewall part (150) connecting the flange part (128) and the bottom surface (140) to each other. At least one edge of the sidewall part (150) has a rounded shape including a curved surface having a first radius (R1) of curvature, and a curved surface having a second radius (R2) of curvature coupled to the curved surface having the first radius (R1) of curvature. The first radius (R1) of curvature is larger than the second radius (R2) of curvature.

## Description

### BACKGROUND

### 1. Field

The present invention relates to a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A secondary battery having high energy density (e.g., an amount of energy to be storable per unit volume) may provide a longer runtime or longer mileage in portable devices or electric vehicles, and the energy density of the secondary battery may be one of key factors that determine a performance of the secondary battery. Accordingly, various technologies for increasing the energy density, for example, such as by improving a structure of a case in the secondary battery, may be desired.

The above information disclosed in this background section is for enhancement of understanding of the background of the present invention, and therefore, it may contain information that does not constitute related (or prior) art.

### SUMMARY

The present invention is directed to a secondary battery.

These and other aspects and features of the present invention will be described in or will be apparent from the following description of embodiments of the present invention.

According to the present invention, a secondary battery includes: an electrode assembly including a first electrode, a second electrode, and a separator interposed between the first electrode and the second electrode; a lower case including a receiving part having a receiving space for accommodating the electrode assembly, and a flange part surrounding around an open side surface of the receiving part; and an upper cover coupled to the flange part of the lower case, and sealing the open side surface of the receiving part. The receiving part of the lower case includes a bottom surface spaced from the flange part, and a sidewall part connecting the flange part and the bottom surface to each other. At least one edge of the sidewall part has a rounded shape including a curved surface having a first radius of curvature, and a curved surface having a second radius of curvature coupled to the curved surface having the first radius of curvature. The first radius of curvature is larger than the second radius of curvature.

In an embodiment, at least one of the upper cover or the lower case includes stainless use steel (SUS).

In an embodiment, a size of the first radius of curvature may be increased as a thickness of the lower case is reduced.

In an embodiment, a thickness of the lower case may be in a range of 0.02 mm to 0.1 mm.

In an embodiment, a thickness of the lower case may be in a range of 0.02 mm to 0.04 mm, and a size of the first radius of curvature may be in a range of 3.0 mm to 6.0 mm.

In an embodiment, a size of the first radius of curvature may be in a range of 2.0 mm to 6.0 mm.

In an embodiment, a depth of the receiving part may be larger than 0 mm and equal to or less than 5.0 mm.

In an embodiment, the sidewall part may include: a first side surface connected to one short side of the bottom surface; a second side surface facing the first side surface; a third side surface connected to one long side of the bottom surface; and a fourth side surface facing the third side surface.

In an embodiment, a first electrode terminal electrically connected to the first electrode and a second electrode terminal electrically connected to the second electrode may be located on at least a portion of the first side surface.

In an embodiment, each of an edge in which the first side surface and the third side surface are coupled to each other, an edge in which the first side surface and the fourth side surface are coupled to each other, an edge in which the second side surface and the third side surface are coupled to each other, and an edge in which the second side surface and the fourth side surface are coupled to each other may have a rounded shape in which the curved surface having the first radius of curvature and the curved surface having the second radius of curvature are coupled to each other.

In an embodiment, the curved surface having the first radius of curvature may be connected to at least one of the first side surface or the second side surface, and the curved surface having the second radius of curvature may be connected to at least one of the third side surface or the fourth side surface.

In an embodiment, each of an edge in which the bottom surface and the first side surface are coupled to each other and an edge in which the bottom surface and the second side surface are coupled to each other may have a curved surface having a third radius of curvature. Each of an edge in which the bottom surface and the third side surface are coupled to each other and an edge in which the bottom surface and the fourth side surface are coupled to each other may have a curved surface having a fourth radius of curvature.

In an embodiment, the third radius of curvature may be same as the fourth radius of curvature.

In an embodiment, a size of the third radius of curvature and a size of the fourth radius of curvature may be increased as a thickness of the lower case is reduced.

In an embodiment, at least a portion of the upper cover may be joined to the flange part of the lower case by laser welding.

In an embodiment, each of at least a portion of the upper cover and at least a portion of the lower case may have a stack structure including: a metal layer; an adhesive layer in contact with the metal layer; and a polymer layer in contact with the adhesive layer. The at least a portion of the upper cover may be joined to the flange part of the lower case by heat staking of the polymer layer of the at least a portion of the upper cover and the polymer layer of the at least a portion of the lower case to each other.

According to one or more embodiments of the present invention, a case for a secondary battery may include: a lower case including a receiving part having a receiving space for accommodating an electrode assembly, and a flange part surrounding around an open side surface of the receiving part; and an upper cover coupled to the flange part of the lower case, and sealing the open side surface of the receiving part. The receiving part of the lower case includes a bottom surface spaced from the flange part, and a sidewall part connecting the flange part and the bottom surface to each other. At least one edge of the sidewall part has a rounded shape including a curved surface having a first radius of curvature, and a curved surface having a second radius of curvature coupled to the curved surface having the first radius of curvature. The first radius of curvature is larger than the second radius of curvature.

In an embodiment, the sidewall part may include: a first side surface connected to one short side of the bottom surface; a second side surface facing the first side surface; a third side surface connected to one long side of the bottom surface; and a fourth side surface facing the third side surface.

In an embodiment, each of an edge in which the first side surface and the third side surface are coupled to each other, an edge in which the first side surface and the fourth side surface are coupled to each other, an edge in which the second side surface and the third side surface are coupled to each other, and an edge in which the second side surface and the fourth side surface are coupled to each other may have a rounded shape in which the curved surface having the first radius of curvature and the curved surface having the second radius of curvature are coupled to each other.

In an embodiment, the curved surface having the first radius of curvature may be connected to at least one of the first side surface or the second side surface, and the curved surface having the second radius of curvature may be connected to at least one of the third side surface or the fourth side surface.

According to some embodiments of the present invention, in a case of a secondary battery, each of edges of a sidewall part may be formed in a rounded shape in which curved surfaces having the same or substantially the same radii of curvature as each other or having different radii of curvature from each other are coupled. As such, by changing a size (e.g., only a size) of one radius of curvature from among the radii of curvature constituting the edge of the sidewall part, without a change in a size of the other radius of curvature, a size of a receiving space in which an electrode assembly may be accommodated in an inside of a lower case may be increased, and the energy density of the secondary battery may be increased.

According to some embodiments of the present invention, in the case of the secondary battery, each of the edges of the sidewall part may be formed in a rounded shape in which curved surfaces having different radii of curvature from each other are coupled, and thus, a structure of the case may be reinforced, and cracks that may occur due to external shocks and the like may be prevented or substantially prevented.

However, aspects and features of the present invention are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present invention, and further describe aspects and features of the present invention together with the detailed description of the present invention. Thus, the present invention should not be construed as being limited to the drawings.
FIG. 1 is an exploded perspective view illustrating an example of a secondary battery according to some embodiments of the present invention.
FIG. 2 illustrates an example of the secondary battery according to some embodiments of the present invention.
FIG. 3 is an exploded perspective view illustrating a case of the secondary battery according to some embodiments of the present invention.
FIG. 4 is a perspective view illustrating a lower case when viewed in a lower side according to some embodiments of the present invention.
FIG. 5 is a cross-sectional view illustrating the lower case taken along the line A-A of FIG. 4.
FIG. 6 illustrates a difference of a size of a receiving space in which an electrode assembly is accommodated according to a change in a radius of curvature.
FIG. 7 illustrates a crack occurrence according to a reduction in a radius of curvature.
FIG. 8 is a table indicating a crack occurrence according to a change in a first radius of curvature according to some embodiments of the present invention.
FIG. 9 is an exploded perspective view illustrating a pouch kind of secondary battery according to some embodiments of the present invention.
FIG. 10 is a cross-sectional view illustrating a pouch kind of secondary battery according to some embodiments of the present invention.

### DETAILED DESCRIPTION

Hereinafter, embodiments of the present invention will be described, in detail, with reference to the accompanying drawings. The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term to explain his/her invention in the best way.

The embodiments described in this specification and the configurations shown in the drawings are only some of the embodiments of the present invention and do not represent all of the technical ideas, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the specification, the singular expressions are intended to include the plural expressions as well, unless the context clearly indicates otherwise. Further, the plural expressions are intended to include the singular expressions as well, unless the context clearly indicates otherwise. It will be further understood that the sentence "when a certain part includes a certain component" throughout the specification means that other components are not excluded but may be further included, unless the context clearly specifies otherwise.

In the present invention, dimensions and relative dimensions of layers and regions illustrated in the drawings may be exaggerated for convenience of illustration. In other words, the dimensions illustrated in drawings are provided for convenience of illustration, and are not limited thereto. Further, the same reference numerals throughout the specification and drawings designate the same or substantially the same elements.

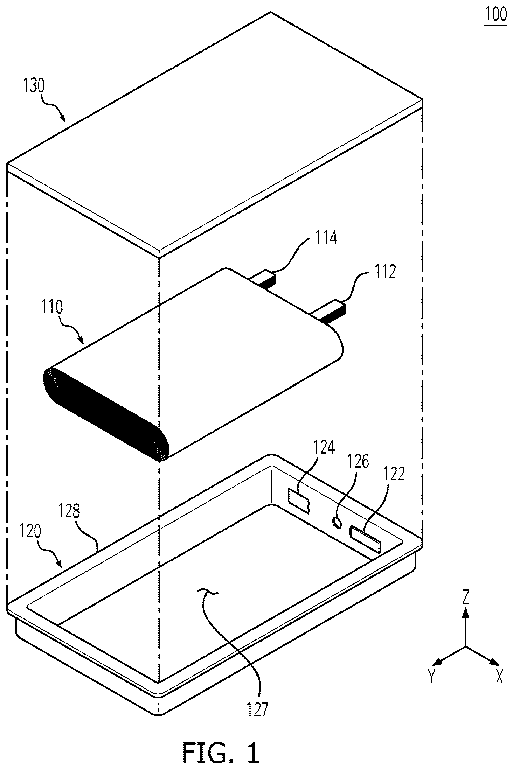

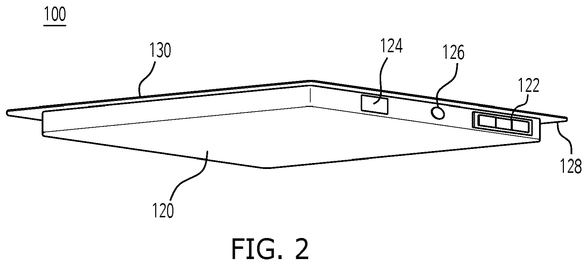

FIG. 1 is an exploded perspective view illustrating an example of a secondary battery 100 according to some embodiments of the present invention. FIG. 2 illustrates an example of the secondary battery 100 according to some embodiments of the present invention.

Referring to FIGS. 1 and 2, the secondary battery 100 according to some embodiments of the present invention may include an electrode assembly 110, a lower case 120 in which the electrode assembly 110 is accommodated, and an upper cover 130 that seals one opened side surface of the lower case 120. For example, the lower case 120 may include a receiving part 127 in which a receiving space for accommodating the electrode assembly 110 is formed, and a flange part 128 surrounding one opened side surface of the receiving part 127. The upper cover 130 may be joined with the flange part 128 of the lower case 120 to seal the one opened side surface of the receiving part 127.

In some embodiments, the upper cover 130 and the lower case 120 may form the overall outer appearance of the secondary battery 100, and may include (e.g., may be formed of) a conductive metal, such as aluminum, an aluminum alloy, and/or a nickel-plated steel. According to some embodiments, at least one of the upper cover 130 or the lower case 120 may include a metallic material, such as stainless use steel (SUS) and/or aluminum (Al). However, the present invention is not limited thereto, and the upper cover 130 and the lower case 120 may include (e.g., may be configured of) various suitable metallic materials that satisfy a strength and a resistance for an external shock desired for the secondary battery 100.

The electrode assembly 110 may be accommodated inside the lower case 120. The electrode assembly 110 may be formed by winding or stacking a stack of a first electrode plate, a separator, and a second electrode plate, which are formed as thin plates or films. When the electrode assembly 110 is a wound stack, a winding axis may be parallel to or substantially parallel to the longitudinal direction (e.g., the y direction) of the lower case 120. In other embodiments, the electrode assembly 110 may be a stack kind rather than a winding kind, and the shape of the electrode assembly 110 is not particularly limited in the present invention. In addition, the electrode assembly 110 may be a Z-stack electrode assembly in which a positive electrode plate and a negative electrode plate are inserted into both sides (e.g., opposite sides) of a separator, which is then bent into a Z-stack. In addition, one or more electrode assemblies 110 may be stacked, such that long sides of the electrode assemblies 110 are adjacent to each other and accommodated in the lower case 120, but the number of electrode assemblies 110 in the case is not particularly limited in the present invention. The first electrode plate of the electrode assembly 110 may act as a negative electrode, and the second electrode plate may act as a positive electrode, or vice versa.

The first electrode plate may be formed by applying a first electrode active material, such as graphite or carbon, to a first electrode current collector formed of a metal foil, such as copper, a copper alloy, nickel, or a nickel alloy. The first electrode plate may include a first electrode tab (e.g., a first uncoated portion) that is a region to which the first electrode active material is not applied. The first electrode tab 112 may act as a current flow path between the first electrode plate and the first current collector. In some embodiments, when the first electrode plate is manufactured, the first electrode tab 112 may be formed by being cut in advance to protrude to one side of the electrode assembly, or the first electrode tab may protrude to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab (e.g., a second uncoated portion) that is a region to which the second electrode active material is not applied. The second electrode tab 114 may act as a current flow path between the second electrode plate and the second current collector. In some embodiments, the second electrode tab 114 may be formed by being cut in advance to protrude to another side (e.g., an opposite side) of the electrode assembly when the second electrode plate is manufactured, or the second electrode plate may protrude to the other side of the electrode assembly more than (e.g., farther than or beyond) the separator without being separately cut.

In some embodiments, the first electrode tab 112 may be connected to one side of a first electrode of the electrode assembly 110, and the second electrode tab 114 may be connected to one side of a second electrode of the electrode assembly 110. The first electrode tab 112 and the second electrode tab 114 may be respectively connected to the first electrode and the second electrode by welding the tabs to uncoated portions of the first electrode and the second electrode, and may be formed by punching the uncoated portions of the first electrode and the second electrode. In a wound state, the first electrode tab 112 and the second electrode tab 114 may be disposed in the same direction as each other to be spaced apart from each other at an interval.

In some embodiments, the lower case 120 may include a first electrode terminal 122 and a second electrode terminal 124. For example, the first electrode terminal 122 may be electrically connected to the first electrode tab 112 of the electrode assembly 110, and the second electrode terminal 124 may be electrically connected to the second electrode tab 114 of the electrode assembly 110. The positions of the first electrode terminal 122 and the second electrode terminal 124 according to embodiments of the present invention are not limited to the positions illustrated in FIG. 1, and may have various suitable modifications as needed or desired. For example, unlike the positions illustrated in FIG. 1, the first electrode terminal 122 and the second electrode terminal 124 may be disposed in a long side surface of the lower case 120, or may disposed in different surfaces of the lower case 120 from each other.

In some embodiments, the lower case 120 may include an electrolyte injection port 126. For example, the electrolyte injection port 126 may be a through hole formed in one surface of the lower case 120. The electrolyte injection port 126 may serve as a passage for injecting an electrolyte into the inside of the case of the secondary battery 100 after the upper cover 130 and the lower case 120 are joined to each other to seal the case. The electrolyte injection port 126 may be sealed with a sealing member after the electrolyte is injected into the inside of the case of the secondary battery 100. The figures illustrate that the electrolyte injection port 126 is disposed between the first electrode terminal 122 and the second electrode terminal 124, but the present invention is not limited thereto, and a position of the electrolyte injection port 126 may have various modifications as needed or desired. For example, the first electrode terminal 122 and the second electrode terminal 124 may be sequentially disposed, and the electrolyte injection port 126 may be disposed in one side of the first electrode terminal 122 or the second electrode terminal 124.

In some embodiments, the receiving part 127 for accommodating the electrode assembly 110 may be formed in the central region or substantially in the central region of the lower case 120 through a press process and the like. The flange part 128 that surrounds (e.g., around a periphery of) the one opened side surface of the receiving part 127 in four directions may be formed in an upper edge portion of the receiving part 127.

In some embodiments, the lower case 120 and the upper cover 130 may be joined to each other to form the outer appearance of the secondary battery 100. The lower case 120 and the upper cover 130 may be metal-joined to each other, for example, such as through welding, brazing, soldering, and/or the like. For example, at least a portion of the upper cover 130 and the flange part 128 of the lower case 120 may be joined to each other through laser welding. In this example, the flange part 128 of the lower case 120 and an edge portion of the upper cover 130 may be joined to each other. Further, after the lower case 120 and the upper cover 130 are joined to each other, at least a portion of the flange part 128 may be cut using a laser to improve the energy density of the secondary battery 100.

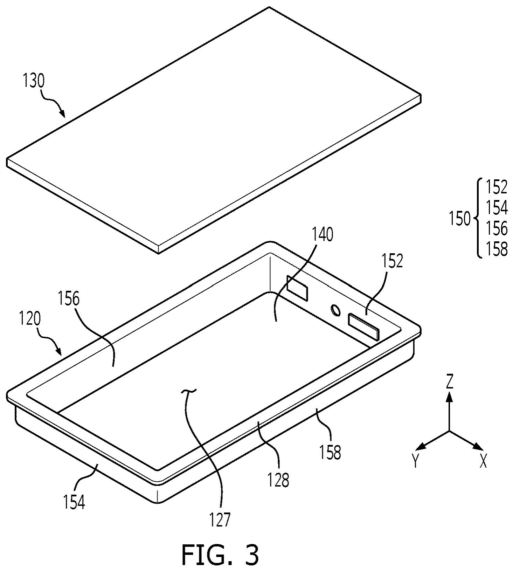

FIG. 3 is an exploded perspective view illustrating a case of the secondary battery 100 according to some embodiments of the present invention.

Referring to FIG. 3, the case of the secondary battery 100 may include the upper cover 130 and the lower case 120. As illustrated in FIG. 3, the upper cover 130 may have a plate shape. The upper cover 130 may be disposed on an upper side of the lower case 120, and may cover the one opened side surface of the lower case 120.

The lower case 120 may include the receiving part 127 in which the receiving space for accommodating the electrode assembly is formed, and the flange part 128 that surrounds (e.g., around a periphery of) the one opened side surface of the receiving part 127. For example, the receiving part 127 of the lower case 120 may include a bottom surface 140 disposed to be spaced apart from the flange part 128, and a sidewall part 150 coupling the flange part 128 and the bottom surface 140 to each other. The sidewall part 150 may include a first side surface 152 adjoined to one short side of the bottom surface 140, a second side surface 154 facing or opposite to the first side surface 152, a third side surface 156 adjoined to one long side of the bottom surface 140, and a fourth side surface 158 facing or opposite to the third side surface 156. As illustrated in FIG. 3, the first electrode terminal electrically connected to the first electrode, the second electrode terminal electrically connected to the second electrode, and the electrolyte injection port as a passage into which the electrolyte may be injected may be disposed in at least a portion of the first side surface 152 of the lower case 120. Accordingly, the first side surface 152 may be defined as a surface in which the first electrode terminal, the second electrode terminal, and the electrolyte injection port are disposed, but the present invention is not limited thereto.

The flange part 128 of the lower case 120 may be an area that is in contact with and joined with the at least a portion of the upper cover 130. For example, the at least a portion of the upper cover 130 and the flange part 128 of the lower case 120 may be joined to each other through welding, brazing, soldering, and/or the like. As an example, the at least a portion of the upper cover 130 and the flange part 128 of the lower case 120 may be joined to each other through laser welding. However, the present invention is not limited thereto, and various suitable methods in which the upper cover 130 and the lower case 120 are joined to each other to seal the case may be used as a method of joining the case of the secondary battery. Further, after the upper cover 130 and the lower case 120 are joined to each other, at least a portion of the flange part 128 may be cut using a laser to improve the energy density of the secondary battery 100.

Although a plate-shaped upper cover 130 is illustrated in FIG. 3, the shape of the upper cover 130 is not limited thereto, and the shape of the upper cover 130 may be the same as or similar to the shape of the lower case 120. For example, like the lower case 120, the upper cover 130 may include a region in which an internal space is formed in a central region of the upper cover 130 by pressurizing the upper cover 130 through a press process. Further, a region, which extends in four directions, such as the flange part 128 of the lower case 120 may be formed in a lower edge portion of the upper cover 130. For example, the flange parts, which are respectively formed in the upper cover 130 and the lower case 120, may face each other and may be joined with each other, and the electrode assembly may be accommodated in the receiving space formed by joining the upper cover 130 and the lower case 120 to each other.

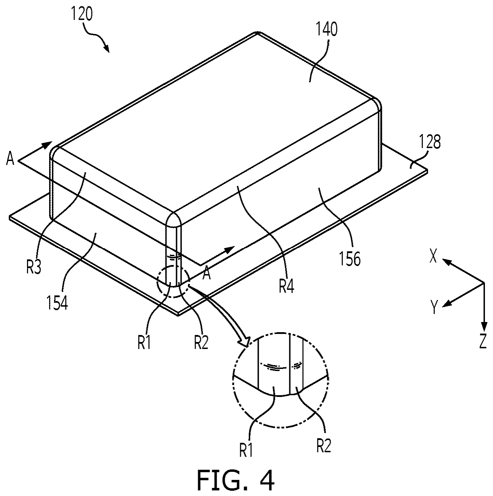

FIG. 4 is a perspective view illustrating the lower case 120 when viewed in a lower side according to some embodiments of the present invention. The perspective view of the lower case 120 illustrated in FIG. 4 may be a view illustrating the lower case 120 of FIG. 3 when viewed in a lower side (e.g., the Z-direction of FIG. 3).

As illustrated in FIG. 4, the lower case 120 according to some embodiments of the present invention may include the flange part 128 that surrounds (e.g., around a periphery of) the one opened side surface of the receiving part, the bottom surface 140 disposed to be spaced apart from the flange part 128, and the sidewall part coupling the flange part 128 and the bottom surface 140 to each other. For example, the sidewall part may include the first side surface adjoined to one short side of the bottom surface 140, the second side surface 154 facing or opposite to the first side surface 152, the third side surface 156 adjoined to one long side of the bottom surface 140, and the fourth side surface facing or opposite to the third side surface 156.

In some embodiments, each of edges that couples one side surface of the sidewall part to side surfaces adjoined to the one side surface may be round-processed. For example, an edge in which the first side surface and the third side surface 156 are coupled to each other may be round-processed. In this example, the edge in which the first side surface and the third side surface 156 are coupled to each other may be formed in a rounded shape in which a curved surface having a first radius R1 of curvature and a curved surface having a second radius R2 of curvature are coupled to each other. Similarly, each of an edge in which the first side surface and the fourth side surface are coupled to each other, an edge in which the second side surface 154 and the third side surface 156 are coupled to each other, and an edge in which the second side surface 154 and the fourth side surface are coupled to each other may be formed in the rounded shape in which the curved surface having the first radius R1 of curvature and the curved surface having the second radius R2 of curvature are coupled to each other.

In some embodiments, the curved surface having the first radius R1 of curvature may be adjoined to at least one of the first side surface or the second side surface 154, and the curved surface having the second radius R2 of curvature may be adjoined to at least one of the third side surface 156 or the fourth side surface. For example, the edge in which the first side surface and the third side surface 156 are coupled to each other may be formed in the rounded shape in which the curved surface having the first radius R1 of curvature and the curved surface having the second radius R2 of curvature are coupled to each other. In this example, the first side surface and the curved surface having the first radius R1 of curvature may be adjoined to each other, and the third side surface 156 and the curved surface having the second radius R2 of curvature may be adjoined to each other. For example, the side surfaces and the curved surfaces may be coupled to each other in order of the first side surface, the curved surface having the first radius R1 of curvature, the curved surface having the second radius R2 of curvature, and the third side surface 156. Accordingly, the curved surface having the first radius R1 of curvature may be defined as a portion that is coupled to a short side surface of the sidewall part of the lower case 120, and the curved surface having the second radius R2 of curvature may be defined as a portion that is coupled to a long side surface of the sidewall part of the lower case 120.

In some embodiments, the first radius R1 of curvature may be larger than the second radius R2 of curvature. For example, if (e.g., when) a size of the second radius R2 of curvature is 2.0 mm, a size of the first radius R1 of curvature may be in a range of 3.0 mm to 6.0 mm, which is larger than the size of the second radius R2 of curvature. However, the present invention is not limited thereto, and the sizes of the first radius R1 of curvature and the second radius R2 of curvature may be variously modified to values different from the above-described values.

In some embodiments, an edge part that couples the bottom surface 140 and the sidewall part to each other may be round-processed. For example, each of an edge in which the bottom surface 140 and the first side surface are coupled to each other and an edge in which the bottom surface 140 and the second side surface 154 are coupled to each other may be formed as a curved surface having a third radius R3 of curvature. Each of an edge in which the bottom surface 140 and the third side surface 156 are coupled to each other and an edge in which the bottom surface 140 and the fourth side surface are coupled to each other may be formed as a curved surface having a fourth radius R4 of curvature. Accordingly, the edge in which the bottom surface 140 and the short side surface are coupled to each other may be formed as the curved surface having the third radius R3 of curvature, and the edge in which the bottom surface 140 and the long side surface are coupled to each other may be formed as the curved surface having the fourth radius R4 of curvature. For example, a size of the third radius R3 of curvature may be the same or substantially the same as a size of the fourth radius R4 of curvature, but the present invention is not limited thereto.

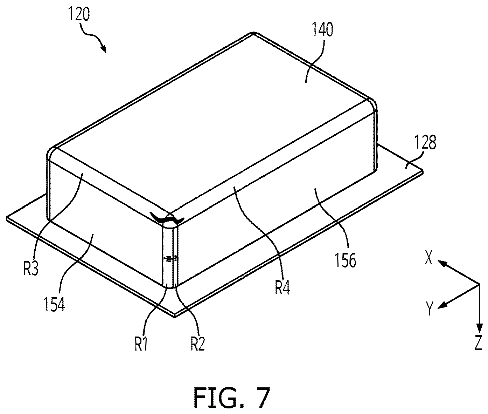

In some embodiments, at least one of the size of the first radius R1 of curvature, the size of the third radius R3 of curvature, or the size of the fourth radius R4 of curvature may be increased as a thickness of the lower case 120 is reduced. As described in more detail below with reference to FIG. 7, even when the curved surfaces have the same or substantially the same radius of curvature as each other, as the thickness of the lower case 120 is reduced, the strength of each edge of the lower case 120 may be reduced, and thus, a probability that cracks may occur in the corresponding edge in response to external shocks and the like may be increased. Accordingly, the probability that the cracks occur in each edge of the lower case 120 may be effectively reduced by controlling at least one of the size of the first radius R1 of curvature, the size of the third radius R3 of curvature, or the size of the fourth radius R4 of curvature as the thickness of the lower case 120 is reduced. As an example, the thickness of the lower case 120 may be in a range of 0.02 mm to 0.1 mm. The size of the first radius R1 of curvature may be in a range of 2.0 mm to 6.0 mm. In another example, the thickness of the lower case 120 may be in a rage of 0.02 mm to 0.04 mm, and the size of the first radius R1 of curvature may be in a range of 3.0 mm to 6.0 mm. When the thickness of the lower case 120 is in a rage of 0.02 mm to 0.04 mm and the size of the first radius R1 of curvature is equal to or larger than 3.0 mm, cracks that may be caused in the lower case 120 may be effectively prevented.

In some embodiments, the size of the first radius R1 of curvature may be increased as a depth of the receiving part of the lower case 120 is increased. Even if (e.g., when) the curved surfaces have the same radius of curvature as each other, as the depth of the receiving part is increased, the strength of each edge that couples the sidewall part of the lower case 120 may be reduced, and thus, the probability that cracks may occur in the corresponding edge may be increased. The depth of the receiving part and the size of the first radius R1 of curvature may be factors which are related to the possibility of a crack occurrence in the lower case 120. Accordingly, the probability that the cracks may occur in each edge which couples the sidewall part of the lower case 120 may be effectively reduced by controlling the size of the first radius R1 of curvature as the depth of the receiving part is increased.

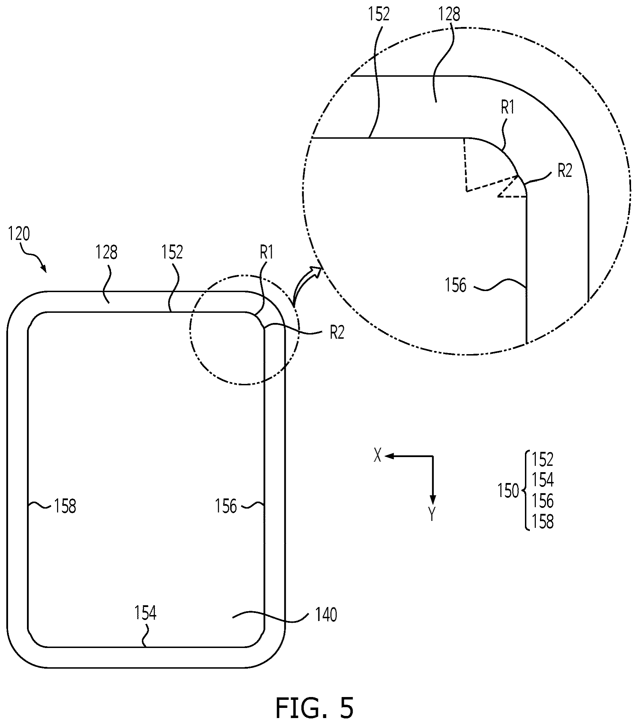

FIG. 5 is a cross-sectional view illustrating the lower case 120 taken along the line A-A of FIG. 4.

Referring to FIG. 5, the lower case 120 may include the bottom surface 140, the flange part 128, and the sidewall part 150 that couples the flange part 128 and the bottom surface 140 to each other. For example, the sidewall part 150 may include the first side surface 152 and the second side surface 154, which correspond to the short side surfaces, and the third side surface 156 and the fourth side surface 158, which correspond to the long side surfaces.

In some embodiments, the edges which couple the sidewall part may be round-processed. For example, the edge in which the first side surface 152 and the third side surface 156 are coupled to each other may be round-processed. In this example, the edge in which the first side surface 152 and the third side surface 156 are coupled to each other may be formed in the rounded shape in which the curved surface having the first radius R1 of curvature and the curved surface having the second radius R2 of curvature are coupled to each other. Similarly, each of the edge in which the first side surface 152 and the fourth side surface 158 are coupled to each other, the edge in which the second side surface 154 and the third side surface 156 are coupled to each other, and the edge in which the second side surface 154 and the fourth side surface 158 are coupled to each other may be formed in the rounded shape in which the curved surface having the first radius R1 of curvature and the curved surface having the second radius R2 of curvature are coupled to each other.

In some embodiments, the curved surface having the first radius R1 of curvature may be adjoined to at least one of the first side surface 152 or the second side surface 154, and the curved surface having the second radius R2 of curvature may be adjoined to at least one of the third side surface 156 or the fourth side surface 158. For example, the edge in which the first side surface 152 and the third side surface 156 are coupled to each other may be formed in the rounded shape in which the curved surface having the first radius R1 of curvature and the curved surface having the second radius R2 of curvature are coupled to each other. In this example, the first side surface 152 and the curved surface having the first radius R1 of curvature may be adjoined to each other, and the third side surface 156 and the curved surface having the second radius R2 of curvature may be adjoined to each other. For example, as illustrated in FIG. 5, the side surfaces and the curved surfaces may be coupled to one another in order of the first side surface 152, the curved surface having the first radius R1 of curvature, the curved surface having the second radius R2 of curvature, and the third side surface 156. Accordingly, the curved surface having the first radius R1 of curvature may be defined as the portion which is coupled to the short side surface of the sidewall part of the lower case 120, and the curved surface having the second radius R2 of curvature may be defined as the portion which is coupled to the long side surface of the sidewall part of the lower case 120.

In some embodiments, the size of the first radius R1 of curvature may be increased as the thickness of the lower case 120 is reduced. In some embodiments, the size of the first radius R1 of curvature may be larger than that of the second radius R2 of curvature. In other embodiments, the size of the first radius R1 of curvature may be increased as the depth of the receiving part of the lower case 120 is increased. In this case, the size of the first radius R1 of curvature may also be larger than that of the second radius R2 of curvature.

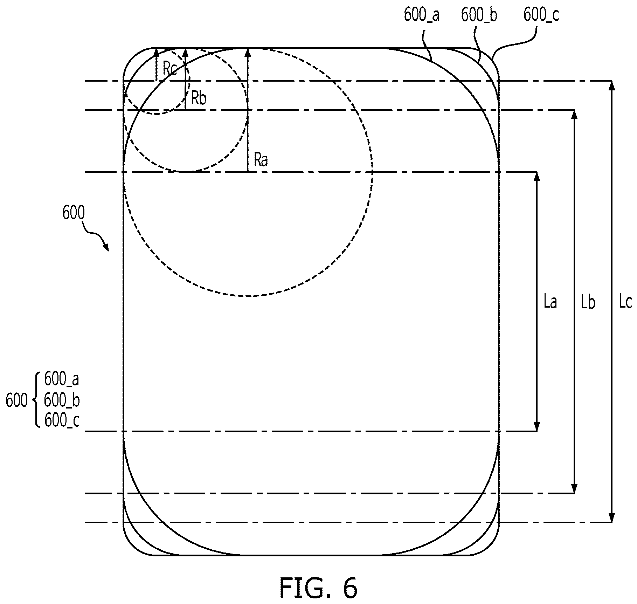

When the thickness of the lower case 120 is thinly formed, or the depth of the receiving part is deeply formed, so as to improve the energy density of the secondary battery, even though the curved surfaces have the same radius of curvature as each other, the probability that cracks may occur in the edges which couple the sidewall part of the lower case 120 may be increased. When the thickness of the lower case 120 is reduced or the depth of the receiving part of the lower case 120 is increased, an increase in the size of the first radius R1 of curvature or the second radius R2 of curvature may be caused so as to prevent or substantially prevent the cracks from occurring in the lower case 120. However, the increase in the size of the first radius R1 of curvature or the second radius R2 of curvature may cause a reduction in the size of the receiving space in which the electrode assembly is accommodated in the inside of the lower case 120, which will be described in more detail below with reference to FIG. 6. Accordingly, in the secondary battery according to some embodiments of the present invention, each edge of the sidewall part may be formed in the rounded shape in which the curved surface having the first radius R1 of curvature and the curved surface having the second radius R2 of curvature are coupled to each other. Accordingly, by changing the size (e.g., only the size) of the first radius R1 of curvature without a change in the size of the second radius R2 of curvature, a reduction in the size of the receiving space in which the electrode assembly is accommodated in the inside of the lower case 120 may be minimized or reduced, and simultaneously, the cracks that may occur in the lower case 120 may be prevented or substantially prevented. Accordingly, some embodiments of the present invention may increase the energy density of the secondary battery and simultaneously prevent or substantially prevent the cracks that may occur in the lower case 120.

FIG. 6 illustrates a difference of a size of a receiving space in which the electrode assembly is accommodated according to a change in a radius of curvature.

Referring to FIG. 6, examples of various lower cases 600 are illustrated as overlapping with each other. For example, three lower cases 600 may have the same horizontal length and vertical length as each other, but may include edges having different sizes of radii of curvature from each other. The examples of the lower cases 600 illustrated in FIG. 6 may correspond to a plan view when the lower case 600 is viewed in an upper side, and flange parts of the lower cases 600 may be omitted for convenience of illustration.

In a lower case 600_a according to a first example, each of edges which couples a sidewall part may be formed as a curved surface having a radius Ra of curvature. In a lower case 600_b according to a second example, each of edges which couples a sidewall part may be formed as a curved surface having a radius Rb of curvature. In a lower case 600_c according to a third example, each of edges which couples a sidewall part may be formed as a curved surface having a radius Rc of curvature. In the examples, a size of the radius Ra of curvature may be larger than that of the radius Rb of curvature, and the size of the radius Rb of curvature may be larger than that of the radius Rc of curvature.

As illustrated in FIG. 6, as the size of the radius of curvature is increased, a size of a receiving space in which the electrode assembly is accommodated in the inside of the lower case 600 may be reduced. For example, a vertical length La of a receiving space of the lower case 600_a having the radius Ra of curvature may be smaller than a vertical length Lb of a receiving space of the lower case 600_b having the radius Rb of curvature. The vertical length Lb of the receiving space of the lower case 600_b having the radius Rb of curvature may be smaller than a vertical length Lc of a receiving space of the lower case 600_c having the radius Rc of curvature. Accordingly, to increase the receiving space of the inside of the lower case 600, or in other words, to improve the energy density of the secondary battery, it may be desired to reduce the radius of curvature.

FIG. 7 illustrates a crack occurrence according to a reduction in the radius of curvature. The lower case 120 illustrated in FIG. 7 may be the same or substantially the same as the lower case 120 of FIG. 4.

Referring to FIG. 7, cracks may occur in the edges that couple the sidewall part and the bottom surface 140 of the lower case 120 to each other due to an external shock and the like. For example, the cracks may occur in the edge that couples the second side surface 154 and the bottom surface 140 to each other, the edge that couples the third side surface 156 and the bottom surface 140 to each other, or the edge that couples the second side surface 154 and the third side surface 156 to each other. In more detail, as illustrated in FIG. 7, the cracks may occur in a vertex in which the edge that couples the second side surface 154 and the bottom surface 140 to each other, the edge that couples the third side surface 156 and the bottom surface 140 to each other, and the edge that couples the second side surface 154 and the third side surface 156 to each other meet each other. Further, cracks may occur in the edges that couple the bottom surface 140 and the sidewall part of the lower case 120 to each other. For example, the cracks may occur in the edge that couples the second side surface 154 and the bottom surface 140 to each other, or the edge that couples the third side surface 156 and the bottom surface 140 to each other. For example, the cracks may occur in the edge that couples the first side surface and the bottom surface 140 to each other, or the edge that couples the fourth side surface and the bottom surface 140 to each other. A cause of a crack occurrence may be due to a reduction in the radius of curvature of each edge in a state in which the thickness of the lower case 120 is equally maintained. For example, to improve the energy density of the secondary battery, a reduction of the radius of curvature in each edge of the lower case 120 may cause the crack occurrence.

In the lower case 120 according to some embodiments of the present invention, at least one edge of the sidewall part may be formed in the rounded shape in which the curved surface having the first radius R1 of curvature and the curved surface having the second radius R2 of curvature are coupled to each other, and the first radius R1 of curvature may be larger than the second radius R2 of curvature. Further, the size of the first radius R1 of curvature may be increased as the thickness of the lower case 120 is reduced, or as the depth of the receiving part is increased. Accordingly, the size of the first radius R1 of curvature may be variously modified without a significant change in the size of the second radius R2 of curvature. As such, some embodiments of the present invention may increase the energy density of the secondary battery, and simultaneously, prevent or substantially prevent cracks that may occur in the lower case 120.

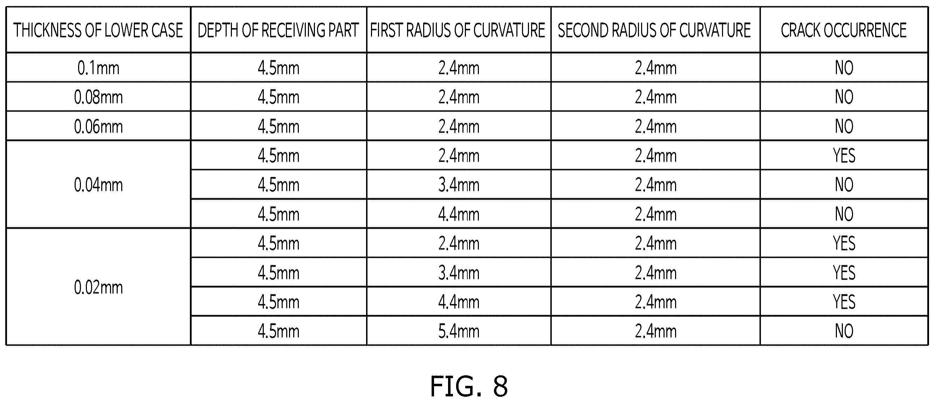

FIG. 8 is a table indicating a crack occurrence according to a change in a first radius of curvature according to some embodiments of the present invention.

Referring to FIG. 8, when the receiving part (e.g., 127 of FIG. 1) of the lower case is formed by molding a flat plate made of stainless use steel (SUS) in the manufacturing of the case of the secondary battery, a test result for a crack occurrence in each edge of the lower case according to the thickness of the lower case is illustrated. As illustrated in FIG. 8, fixed values, for example, such as 4.5 mm and 2.4 mm, are applied as the depth of the receiving part and the second radius of curvature (e.g., R2 of FIG. 5), respectively.

In the forming of the receiving part of the lower case by molding the flat plate made of stainless use steel (SUS), if (e.g., when) the thickness of the lower case is in a range of 0.06 mm to 0.1 mm, no crack may occur in the edges of the lower case even when the size of the first radius of curvature (e.g., R1 of FIG. 5) is 2.4 mm, which is the same as the size of the second radius of curvature. The test result may show that the probability of crack occurrence in the edges of the lower case is low even when the thickness of the lower case is formed to be as thin as about 0.06 mm in the case where the size of the first radius of curvature and the size of the second radius of curvature are about 2.4 mm.

In the forming of the receiving part of the lower case by molding the flat plate made of stainless use steel (SUS), if (e.g., when) the thickness of the lower case is about 0.04 mm and the size of the first radius of curvature is 2.4 mm, which is the same as the size of the second radius of curvature, cracks may occur in the edges of the lower case. Accordingly, in the case where the size of the first radius of curvature and the size of the second radius of curvature are about 2.4 mm, if (e.g., when) the thickness of the lower case is thinly formed to be equal to or less than about 0.04 mm, the probability of a crack occurrence in the edges of the lower case may be increased. However, if (e.g., when) the first radius of curvature is 3.4 mm or 4.4 mm, which is larger than the size of the second radius of curvature, no crack may occur in the edges of the lower case. Accordingly, the crack occurrence in the edges of the lower case may be effectively prevented without a significant change in the size of the receiving space of the lower case by controlling the size of the first radius of curvature.

Similarly, in the forming of the receiving part of the lower case by molding the flat plate made of stainless use steel (SUS), if (e.g., when) the thickness of the lower case is about 0.02 mm and the size of the first radius of curvature is in a range of about 2.4 mm to 4.4 mm, cracks may occur in the edges of the lower case. However, if (e.g., when) the first radius of curvature is 5.4 mm, no crack may occur in the edges of the lower case.

Further, in the forming of the receiving part of the lower case by molding the flat plate made of stainless use steel (SUS), the test results illustrated in FIG. 8 may also be applied to a test result for crack occurrence in the edges of the lower case according to the depth of the receiving part. For example, in a case where the thickness of the lower case is about 0.1 mm and the size of the first radius of curvature and the size of the second radius of curvature are each 2.4 mm, if (e.g., when) the depth of the receiving part is increased larger than 4.5 mm, cracks may occur in the edges of the lower case in a specific depth of the receiving part. Even in this example, the cracks that may occur in the edges of the lower case may be improved by increasing the size of the first radius of curvature.

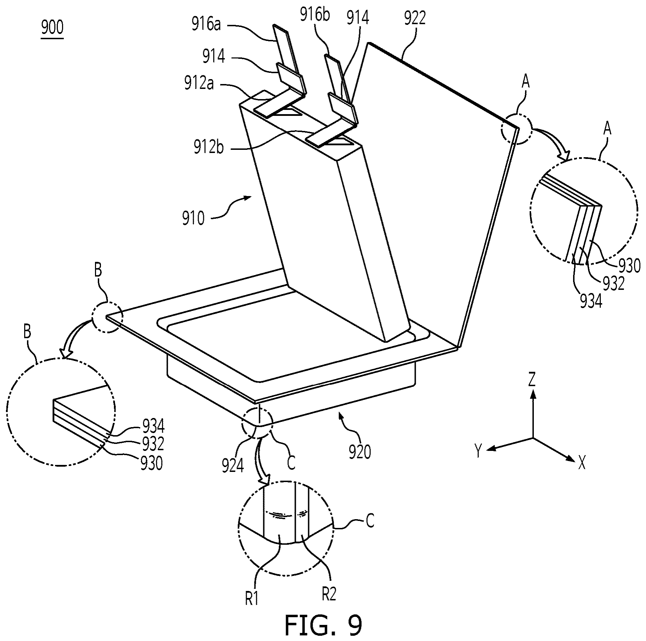

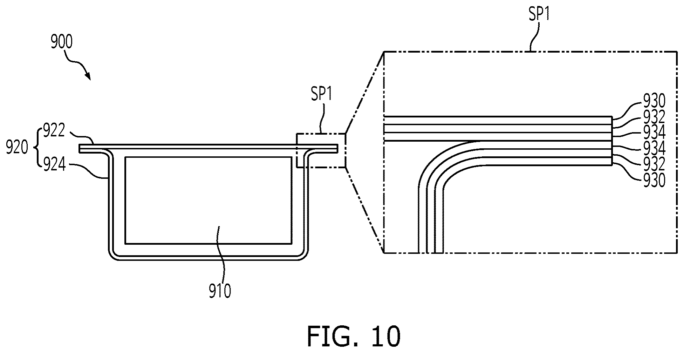

FIG. 9 is an exploded perspective view illustrating a pouch kind of secondary battery according to some embodiments of the present invention. FIG. 10 is a cross-sectional view illustrating a pouch kind of secondary battery according to some embodiments of the present invention.

Referring to FIG. 9, a secondary battery 900 may include an electrode assembly 910, and a case 920 to accommodate the electrode assembly 910.

The electrode assembly 910 may include a negative electrode plate as a first electrode plate, a positive electrode plate as a second electrode plate, and a separator interposed therebetween. The negative electrode plate may include a negative electrode tab 912a electrically connected to a negative electrode uncoated portion. The positive electrode plate may include a positive electrode tab 912b electrically connected to a positive electrode uncoated portion. The negative electrode tab 912a and the positive electrode tab 912b may be respectively welded to a negative electrode lead 916a and a positive electrode lead 916b of an external terminal to be electrically connected to the outside. A tab film 914 for insulation from the pouch may be attached to the negative electrode lead 916a and the positive electrode lead 916b.

The case 920 may include an upper cover 922 and a lower case 924. For example, the upper cover 922 may have a plate shape. The lower case 924 may include a receiving part for accommodating the electrode assembly 910, and a flange part surrounding (e.g., around a periphery of) one opened side surface of the receiving part. In a state in which the electrode assembly 910 is accommodated in the receiving part of the lower case 924, the flange part of the lower case 924 and a partial region of the upper cover 922 may be in contact with each other so that the upper cover 922 and the lower case 924 may be sealed. For example, the partial region of the upper cover 922 may correspond to a region facing the flange part of the lower case 924.

In some embodiments, at least portions of the upper cover 922 and/or the lower case 924 of the case 920 may have stack structures including a metal layer 930, an adhesive layer 932 which is in contact with the metal layer 930, and a polymer layer 934 which is in contact with the adhesive layer 932. In this example, the metal layer 930 may include stainless use steel (SUS).

In some embodiments, referring to a sealing region SP1 of FIG. 10, when the flange part of the lower case 924 and the partial region of the upper cover 922 are in contact with each other to be sealed, the polymer layer 934 of the upper cover 922 and the polymer layer 934 of the lower case 924 may be joined with each other. For example, the at least a portion of the upper cover 922 and the flange part of the lower case 924 may be joined to each other through heat staking of the polymer layers of the stack structures, but the present invention is not limited thereto.

In some embodiments, an edge part that couples a sidewall part of the lower case 924 may be round-processed. For example, each of edges that couples the sidewall part of the lower case 924 may be formed in a rounded shape in which a curved surface having the first radius R1 of curvature and a curved surface having the second radius R2 of curvature are coupled to each other. The curved surface having the first radius R1 of curvature may be coupled to a short side surface of the sidewall part of the lower case 924, and the curved surface having the second radius R2 of curvature may be coupled to a long side surface of the sidewall part of the lower case 924. The first radius R1 of curvature and the second radius R2 of curvature may be the same or substantially the same as those described above with reference to FIGS. 4 to 8, and thus, redundant description thereof may not be repeated hereinafter. Further, as illustrated in FIG. 4, an edge part that couples a bottom surface and the sidewall part of the lower case 924 to each other may be round-processed. For example, an edge in which the bottom surface and the short side surface are coupled to each other may formed as a curved surface having the third radius of curvature (e.g., R3 in FIG. 4), and an edge in which the bottom surface and the long side surface are coupled to each other may be formed as a curved surface having the fourth radius of curvature (e.g., R4 in FIG. 4). In this example, the size of the third radius of curvature may be the same or substantially the same as a size of the fourth radius of curvature, but the present invention is not limited thereto.

Although some embodiments of the present invention have been described above, the present invention is not limited thereto. Various modifications and variations can be made thereto by those having ordinary skill in the art within the scope of the present invention, as defined by the appended claims and their equivalents.

### DESCRIPTION OF SOME REFERENCE SYMBOLS

100: secondary battery
110: electrode assembly
112: first electrode tab
114: second electrode tab
120: lower case
122: first electrode terminal
124: second electrode terminal
126: electrolyte injection port
127: receiving part
128: flange part
130: upper cover
140: bottom surface
150: sidewall part
152: first side surface
154: second side surface
156: third side surface
158: fourth side surface

## Claims

1. A secondary battery (100) comprising:
an electrode assembly (110) comprising a first electrode, a second electrode, and a separator interposed between the first electrode and the second electrode;
a lower case (120) comprising a receiving part (127) having a receiving space for accommodating the electrode assembly (110), and a flange part (128) surrounding around an open side surface of the receiving part (127); and
an upper cover (130) coupled to the flange part (128) of the lower case (120), and sealing the open side surface of the receiving part (127),
wherein the receiving part (127) of the lower case (120) comprises a bottom surface (140) spaced from the flange part (128), and a sidewall part (150) connecting the flange part (128) and the bottom surface (140) to each other,
wherein at least one edge of the sidewall part (150) has a rounded shape comprising a curved surface having a first radius (R1) of curvature, and a curved surface having a second radius (R2) of curvature coupled to the curved surface having the first radius (R1) of curvature, and
wherein the first radius (R1) of curvature is larger than the second radius (R2) of curvature.

2. The secondary battery (100) as claimed in claim 1, wherein at least one of the upper cover (130) or the lower case (120) comprises stainless use steel (SUS).

3. The secondary battery (100) as claimed in claim 1 or 2, wherein a size of the first radius (R1) of curvature is increased as a thickness of the lower case (120) is reduced.

4. The secondary battery (100) as claimed in any of the preceding claims, wherein a thickness of the lower case (120) is in a range of 0.02 mm to 0.1 mm.

5. The secondary battery (100) as claimed in any of the preceding claims, wherein a thickness of the lower case (120) is in a range of 0.02 mm to 0.04 mm, and a size of the first radius (R1) of curvature is in a range of 3.0 mm to 6.0 mm.

6. The secondary battery (100) as claimed in any of the preceding claims, wherein a size of the first radius (R1) of curvature is in a range of 2.0 mm to 6.0 mm.

7. The secondary battery (100) as claimed in any of the preceding claims, wherein a depth of the receiving part (127) is larger than 0 mm and equal to or less than 5.0 mm.

8. The secondary battery (100) as claimed in any of the preceding claims, wherein the sidewall part (150) comprises:
a first side surface (152) connected to one short side of the bottom surface (140);
a second side surface (154) facing the first side surface (152);
a third side surface (156) connected to one long side of the bottom surface (140); and
a fourth side surface (158) facing the thrid side surface (156).

9. The secondary battery (100) as claimed in claim 8, wherein a first electrode terminal (122) electrically connected to the first electrode and a second electrode terminal (124) electrically connected to the second electrode are located on at least a portion of the first side surface (152).

10. The secondary battery (100) as claimed in claim 8 or 9, wherein each of an edge in which the first side surface (152) and the third side surface (156) are coupled to each other, an edge in which the first side surface (152) and the fourth side surface (158) are coupled to each other, an edge in which the second side surface (154) and the third side surface (156) are coupled to each other, and an edge in which the second side surface (154) and the fourth side surface (158) are coupled to each other has a rounded shape in which the curved surface having the first radius (R1) of curvature and the curved surface having the second radius (R2) of curvature are coupled to each other.

11. The secondary battery (100) as claimed in claim 10, wherein the curved surface having the first radius (R1) of curvature is connected to at least one of the first side surface (152) or the second side surface (154), and
wherein the curved surface having the second radius (R2) of curvature is connected to at least one of the third side surface (156) or the fourth side surface (158).

12. The secondary battery (100) as claimed in claim 10 or 11, wherein each of an edge in which the bottom surface (140) and the first side surface (152) are coupled to each other and an edge in which the bottom surface (140) and the second side surface (154) are coupled to each other has a curved surface having a third radius (R3) of curvature, and
wherein each of an edge in which the bottom surface (140) and the third side surface (156) are coupled to each other and an edge in which the bottom surface (140) and the fourth side surface (158) are coupled to each other has a curved surface having a fourth radius (R4) of curvature.

13. The secondary battery (100) as claimed in claim 12, wherein the third radius (R3) of curvature is same as the fourth radius (R4) of curvature.

14. The secondary battery (100) as claimed in claim 12 or 13, wherein a size of the third radius (R3) of curvature and a size of the fourth radius (R4) of curvature are increased as a thickness of the lower case (120) is reduced.

15. The secondary battery (100) as claimed in any of the preceding claims, wherein at least a portion of the upper cover (130) is joined to the flange part (128) of the lower case (120) by laser welding.
